## Europäisches Patentamt

## European Patent Office

## Office européen des brevets

(19)

(11) Publication number: **0 230 573**
**B1**

(12) **EUROPEAN PATENT SPECIFICATION**

(45) Date of publication of patent specification: **23.01.91**

(51) Int. Cl.⁵: **G 01 N 27/31**

(21) Application number: **86116842.5**

(22) Date of filing: **03.12.86**

(54) **Selectively ion-permeable dry electrodes for analyzing selected ions in aqueous solution.**

(30) Priority: **23.12.85 CH 5504/85**

(43) Date of publication of application:
**05.08.87 Bulletin 87/32**

(45) Publication of the grant of the patent:
**23.01.91 Bulletin 91/04**

(84) Designated Contracting States:
**CH DE FR GB IT LI**

(56) References cited:
**EP-A-0 160 997**
**EP-A-0 193 676**
**US-A-4 487 679**

(73) Proprietor: **F. HOFFMANN-LA ROCHE AG**
**Postfach 3255**
**CH-4002 Basel (CH)**

(72) Inventor: **Kulhanek, Antonin**
**47 Avenue du Lignon**
**CH-1219 Le Lignon (CH)**
Inventor: **Siddiqi, Iqbal**
**5 Tour de Champel**
**CH-1206 Geneva (CH)**
Inventor: **Wuhrmann, Hans-Rudolf**
**9 Rebgasse**
**CH-4431 Lampenberg (CH)**

(74) Representative: **Buntz, Gerhard et al**
**Grenzacherstrasse 124 Postfach 3255**
**CH-4002 Basel (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to "disposable" dry laminar electrodes having an ion-selective diaphragm, and also relates to a method of manufacture. The electrodes are for determining certain ions in aqueous solution, e.g. $Na^+$, $K^+$, $Cl^-$, $Ca^{+2}$, $Li^+$, inter alia in biological fluids.

There are already a large number of prior-art electrodes and similar devices for selectively determining ions in aqueous solutions. The electrodes usually comprise an internal electrochemical reference half-cell at a stable potential and adapted, in conjunction with an external reference electrode immersed simultaneously with the measuring electrode in a solution to be analyzed, to form a cell having a potential dependent on the presence of a given ion in the solution.

In some texts, an assembly of this kind is described as a "battery". We shall avoid using this term here, since a "battery" produces current in contrast to the present cell, which delivers a potential only, so as not to undergo irreversible modification.

The potential is proportional to the logarithm of the activity of the chosen ion in accordance with NERNST's well known equation $E = E_o + K \ln C_i$ where $E_o$ is the standard electromotive force and K is a constant. The potential is therefore dependant on to the concentration of the ion, which can then be deduced by comparison with standard solutions.

For example, documents CH—A—604 167 and US—A—4 214 968; 4 053 381; 4 171 246 (EASTMAN KODAK) describe electrodes in the form of dry multi-laminates comprising, in the following order an insulating support, a metal electrically conductive layer covered with an insoluble salt of the metal, a part of the layer being used as a terminal for connection to an electrometer, a reference electrolyte and an ion-selective diaphragm for selectively measuring a given ion. The assembly made up of the metal layer, the insoluble salt and the reference electrolyte constitutes the internal reference half-cell at stable potential. Alternatively, the assembly can be replaced by a conductive layer covered with a redox system, e.g. the quinone-hydroquinone couple, which system likewise comprises an internal reference cell at stable potential.

The ionically selective diaphragm usually comprises a hydrophobic matrix containing, dispersed in a plasticizer, an ionophoric substance, i.e. one of use for selectively detecting a given ion to the exclusion of any other ions in the solution to be analyzed, compare W. E. MORF et al., Ion-Selective Electrodes in Analytical Chemistry, Vol. I, FRIESER Editor, Plenum Press (1981), PP 221 ff.

Document US—A—3 856 649 (MILES) describes an electrode having a similar structure except that the conductive element is filiform instead of laminar. The electrolyte layer is dispersed in an appreciably hydrated hydrophilic binder.

Document GB—A—2 106 253 (FUJI) likewise describes an electrode for selectively determining ions, the electrode, being a laminate comprising an insulating support, a conductive layer covered with an insoluble salt of the metal forming the conductive layer, and a hydrophobic layer of an ion-selective material (ISM) covering the rest. This document also describes a simplified variant electrode omitting not only the reference electrolyte but also the insoluble salt. In this variant, the electrode comprises only the conductive layer covered with ISM material. An electrode of this kind is identical to the covered filamentary electrodes according to Anal. Chem. 42, 856 (1972).

Document US—A—4 454 007 (DUPONT) likewise describes a laminar ion-selective electrode having the following structure: a baseplate of insulating material, a layer of conductive material, a layer comprising powdered carbon dispersed in a dielectric polymer, and finally an ion-selective diaphragm made of material which penetrates with the material in the preceding layer at their junction plane.

European Patent Publication No. 160997 discloses an ion selective electrode in which an electrolyte layer consists of an electrolyte salt of a sodium ion with the anion contained in the metal/metal-salt configuration. The electrolyte layer is by applying an aqueous solution of the electrolyte salt and drying it with hot gas for a short time of several minutes. This drying step reduces the remaining moisture but does not eliminate the water totally.

European Patent Publication No. 193676 published after the priority of the present application is directed to a solid state electrode which is produced by dip-coating a support conductor (wire). The various layers constituting the electrode configuration are generated by dipping the element in hot solutions and allowing it to dry. In this way the drying is only superficial.

In conventional practice, the previously-described electrodes are used as follows. When testing a solution for analysis, a drop thereof is deposited on to the diaphragm, which has selective ion permeability, and the drop is also placed in contact with the external reference electrode, e.g. via a salt bridge, the terminals of the ion-selective electrode and the reference electrode being connected to a suitable electrometer for reading the potential. In numerous prior-art cases, the external reference electrode may be similar to or identical with the measuring electrode, and the external reference potential can be supplied either by a standard solution deposited simultaneously with the solution to be analyzed (in which case the solutions make contact by diffusion into a porous element situated between the deposition areas) or by a fixed reference element (the salt bridge for example) forming part of the external reference electrode.

In order to locate and fix the position of the drop of solution to be analyzed (and also the drop of standard solution when necessary) the ISM diaphragm is usually covered with a layer of insulating, waterproof material formed with compartments or windows giving access to only that portion of the ISM layer facing the window. This system prevents the drop spreading on the surface of the ISM layer and can also be used for selecting a fixed preset quantity of liquid for measuring, since the capacity of the compartments is kept constant from one electrode to the other.

It is recognized that the prior art electrodes have undeniable stability and reliability when their internal stable-potential reference cell comprises a metal covered in succession with an insoluble salt of the metal and a reference electrolyte having the same anion as the insoluble salt and the same cation as the ions to be measured.

In general, as in the case of the citations the, reference electrode comprises a hydrophilic polymer matrix containing a known specific concentration of the reference salt. In the case for example of an electrode which selects potassium ions and contains an Ag/AgCl couple, the reference electrolyte salt will preferably be potassium chloride dispersed in any hydrophilic binder such as gelatin, agarose, polyacrylamide, polyhydroxyacrylic acid polyvinyl alcohol, etc. However, if the electrode is to remain in working order even in the case of a "dry" electrode, the binder must contain a non-negligible residual quantity of water, e.g. of the order of 1 to 2% or more. Reference US—A—4 214 968 discloses a moisture rate above 12%.

It has been found that an electrode of this kind is not completely stable when stored in ambient air. The reference electrolyte phase tends slowly to contract through shrinkage and loses its operational qualities unless stored at a very low temperature ($-18°C$). Even if in perfect condition, the electrode has to be put into the operative state before use, e.g. by preliminary moistening, thus making it inconvenient to use.

The électrode according to the invention, as defined in claim 1, obviates these disadvantages. preferably, the reference électrode comprises only the dehydrated salt without any binder. It is also surprising and completely unexpected that an aforementioned layer of dehydrated salt can operate as the reference electrolyte, as efficiently as the prior-art electrolytes of specific concentration in a hydrophilic binder, whereas it only comprises crystals or aggregates of crystals of the salt in question, regularly distributed over the metal surface in contact with the insoluble salt of the metal. The electrode comprising a dehydrated salt as a reference electrolyte also has a very short response time and a small or negligible drift.

The invention will now be described in greater detail with reference to the accompanying drawings, in which:

Fig. 1 is a diagrammatic section through an embodiment of the electrode constructed according to the invention:

Fig. 2 is a diagrammatic representation on a larger scale of a method of measuring potential using an external reference electrode, and

Fig. 3 is a graph showing the variation of electrode potential with time.

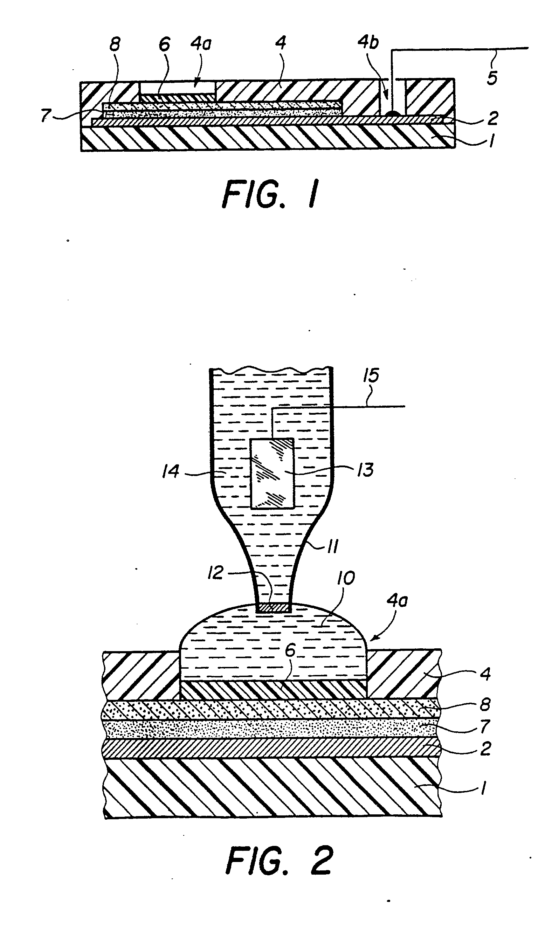

Fig. 1 shows an electrode comprising the following components in succession: an insulating base plate or sheet 1, a layer of electrically conductive metal 2, a layer 7 of an insoluble salt of the metal forming layer 2, a layer 8 of a reference electrolyte having the same anion as the insoluble salt and the same cation as that which is to be measured in the analytical solution, and finally a mask 4 of insulating hydrophobic material covering the rest and formed with two windows 4a and 4b. Window 4b is for establishing electric contact, e.g. via a conductor 5 and consequently providing a contact area for connecting layer 2 to a terminal of an electrometer (not shown).

The electrode in intimate contact with the reference element 3 also comprises a diaphragm 6 selective for specific ions, e.g. $K^+$ ions, the diaphragm being made completely sealing-tight with respect to the walls of the mask by interdiffusion between the binder and diaphragm 6 (a polymer) and the material of mask 4. This interpenetration results from the manufacturing process, details of which will be given hereinafter.

By way of example if it is desired to measure $K^+$ the conductive base 2 can be silver, the insoluble salt can be a silver halide such as AgCl, and the electrolyte 8 can be a potassium halide. Of course, all other variants of metals, insoluble salts and dry electrolytes are also possible.

Fig. 2 illustrates one method of analyzing a solution 10 by means of the electrode in Fig. 1.

To make the analysis, a drop 10 of the solution for analysis is taken and deposited in the compartment 4a formed in mask 4, so that it makes contact with the ion selective diaphragm 6. Next, contact is made with an electrometer via a coupling means, e.g. a pipette 11 having a porous glass tip 12 and a reference electrode 13 (e.g. a silver plate covered with AgCl and immersed in a reference solution 14, e.g. KCl N), present in the pipette. Contact with the electrometer is made via conductor 5 and also via a conductor 15 connected to the reference electrode 13. Next, the potential of the electrochemical cell formed by the aforementioned elements is measured and, if the reference potential and the concentration of the reference solution 14 are known. It is possible to calculate the concentration of chosen ions in solution 10 by using the NERNST relation (see e.g. Ion-Selective Electrode Methodology, by A. K. Covington, CRC Press Inc. (1984), Boca Raton, Fla.; "Physical Chemistry" by W. J. Moore, Prentice-Hall, Inc. 3e ed. London 1962, p.389).

The electrodes according to the invention can be constructed by using an insulating base 1 comprising a sheet, film or plate of a polymer such as PVC, nylon, cellulose acetate, polycarbonates, plexiglass, polystyrene, etc. The nature of the insulating base is not critical provided it does not interfere with the other electrode components, and it can be made from conventional materials and by conventional methods.

The conductive layer 2 can be made from a metal sheet or film, e.g. Fe, Ag, Cu, Ni, Co, etc., If, for example, layer 2 is of silver, it can comprise a sheet of silver 10 µm or more thick, or a deposit of silver made by the "electrodes" technique or by evaporation in vacuo, or by application of silver paint, e.g. type P—720 or P—750 manufactured by JOHNSON-MATTHEY, England. The silver layer can be coated with an insoluble silver salt, e.g. silver chloride, by oxidizing by known methods, e.g. chemically or by anodization in the presence of HCl by conventional methods.

The salt constituting the electrolyte in contact with the insoluble salt (chloride) of the metal layer can be NaCl if the electrode is selectively permeable to sodium ions. Of course, if the conductive layer is silver and the insoluble salt is a cyanide, bromide or iodide, the anion in the electrolyte will comprise cyanides, bromides or iodides of alkali metals or other corresponding metals.

The salt forming the electrolyte is dehydrated, i.e. its water content is negligible and in all cases below 1%. A homogeneous layer of dehydrated salt can be obtained e.g. by covering the insoluble salt with an aqueous solution of the salt constituting the electrolyte and then evaporating the layer to dryness and heating it in an oven for the time required to obtain the desired degree of dehydration. Alternatively, use can be made of "Physical Vapour Deposition" techniques (e.g. evaporation in vacuo) to obtain a uniform layer of dehydrated electrolyte.

The mask can be a single sheet of adhesive polymer pressed cold or hot on to the top of the components of the laminate and intimately following their shape.

Diaphragm 6 comprises a binder, a plasticizer and an ionophore. The choice of ionophore will depend on the nature of the ions to be determined, e.g. valinomycin for potassium, methyl-monensin for sodium, certain phosphoric esters for calcium, etc. Detailed information on the required ionophores, depending on the chosen type of analysis, will be found among the previous citations, inter alia document US—A—4 454 007.

Electrodes of the kind according to the invention may have defects due to short-circuits, either through inter-layer diffusion of the aqueous liquids for analysis, or when they accidentally come into contact with the edges of the electrodes. Attempts have been made to remedy these defects by various means, e.g. by tightly sealing the edges of the electrodes (GB—A—2 106 253) or by grooving the conductive layer so as to divide it into areas and filling the grooves with ISM material (GB—A—2 121 183).

As we shall show, in the manufacture of electrodes according to the invention, the short-circuit problem has been solved by a completely tight seal between the semi-permeable ion-selective (ISM) diaphragm and the impermeable hydrophobic mask covering the electrode.

The binder for the ionophoric compound can be a polymer such as polyvinyl chloride (PVC). polystyrene, polyacrylates, polycarbonates, polyesters (polyethylene terephthalate), etc. Preferably, to obtain optimum compatibility between member 6 and mask 4 (i.e. to ensure maximum sealing-tightness between these components) the polymer chosen for the binder of diaphragm 6 will be identical with the material in the mask, e.g. PVC, Also, in order to assemble the diaphragm, a solution of constituents thereof should be applied in a solvent in which the mask material is also soluble.

The plasticizer used in the diaphragm can be one of the conventional plasticizers such as dimethylphthalate, dioctylphenylphosphonate, dibutylphthalate, tritolylphosphate, dibutylsebacate, etc. Other examples of plasticizers will be found in the citations referred to.

The practical construction of the electrodes by the method according to the invention is simple and follows substantially from the preceding considerations.

The various laminate components are selected and superposed and joined either by simple adhesion or by pressing when cold or hot. For example, in one embodiment of an electrode as per Fig. 1, the method is as follows: A layer of silver, e.g. a sheet of silver, is deposited on a plastics plate and anodized in a hydrochloric medium to form a layer of AgCl having a thickness of a few tens to a few hundred μm (e.g. 1 to 100 μm). Next, an aqueous solution of KCl of concentration between e.g. 0.01 and 3.5 M is deposited on to the AgCl layer and is evaporated and dehydrated to complete dryness. The assembly is then covered by an adhesive PVC mask previously formed with an opening corresponding to window 4a. The thickness of the mask is of the order of 0.05 to 0.5 mm. Next, a solution of ionophore containing PVC binder, a plasticizer and a solvent such as THF is deposited in the opening in the mask. The solution is then dried to form a film constituting the diaphragm 6. During this operation, the solvent dissolves, part of the walls of the mask with which it is in contact and, after evaporation, forms a completely tight seal between the diaphragm and the walls of opening 4a.

The invention is illustrated by the following example.

## Example

A. Preparation of a conductive metal base in contact with an insoluble salt of the metal

A silver sheet 0.1 mm thick was selected and polished, degreased, cleaned and rinsed by conventional methods (emery No. 600. isopropyl alcohol, distilled water, conc. NH₄OH followed by distilled water). One surface of it was then protected by applying a self-adhesive polyethylene film from 0.2 to 0.5 mm thick. Polyethylene may be replaced by an adhesive PVC or mylar sheet.

An electric contact was formed at the free end of the sheet, after which it was immersed in an electrolytic bath of 0.5 M aqueous sulphuric acid and the silver sheet was cathodized under normal conditions: platinum or vitreous carbon counterelectrode, ambient temperature, voltage 4.5 V, duration of treatment 20 min.

The sheet was rinsed with twice-distilled water and placed in a second electrolytic bath of 0.1 N aqueous hydrochloric acid and anodized under the following conditions: ambient temperature, current density 0.3 A/dm$^2$:, duration 7 minutes. (This and the subsequent operations must be carried out under subdued light to avoid damaging the photosensitive silver chloride).

The sheet was again rinsed and depolarized in the following manner. Two sheets anodized as described were placed in a vessel containing twice-distilled hot water (60—80°C) and were eleelctrically shortcircuited for 12 hours. After this treatment, the sheets comprised a layer of silver protected on one surface by the plastics sheet and covered on the other surface by a thickness of about 1 to 15 μm of AgCl. Manufacture of these reference components was checked by means of a sample, the potential of which was measured in a standard 3 M KCl solution using a standard calomel reference counter-electrode. The measured value (−33 to −34 mV under normal conditions) was correct to within 0.1 mV of the theoretical value. The sheets were dried and kept in darkness until used for manufacturing the electrodes. Note that the anodization treatment can be replaced by oxidation for 1 to 2 minutes at ambient temperature in a solution containing 10.1 g potassium bichromate, 15.4 g KCl and 25 ml of conc. HCl per litre.

B. Manufacture of an electrode which is selective for potassium ions

A 7 × 15 mm portion was cut from a sheet of Ag/AgCl prepared as described hereinbefore, and about 2 μl of a 3.5 M aqueous solution of KCl was deposited over the entire non-protected surface, using a pipette. The water was evaporated from the solution and the plate portion was dried for 8—12 hours at 110° until completely dehydrated. After this period, the activated surface was covered with fine KCl crystals (about 5 mg) uniformly distributed over the entire surface. In this treatment, the KCl was not associated with any hydrophilic matrix as in the prior art. Dry KCl layers were also prepared by the same method but using aqueous solutions containing 7 × 10$^{-3}$ M and 0.1 M KCl.

An area of a few mm$^2$ was cleared near the end of the plate portion to serve as a place of electric contact, and a connector (e.g. a connecting wire) was soldered thereto, after which the plate portion was covered with a PVC sheet (mask) formed (see Fig. 2) with an opening or window 4a about 3 to 5 mm in diameter giving access to a corresponding area of the active layer of the electrode. Mask 4 was made from a self-adhesive sheet about 0.1 mm thick.

About 20 μl of an ISM solution prepared from 6.6 mg of valinomycin (Val); 2.014 mg of bis(2-ethylhexyl)- adipate; 2.044 g of high molecular-weight PVC and 20 ml of tetrahydrofuran (THF) was then poured into window 4 through a pipette. The solution was then evaporated, during which time the THF dissolved part of the PVC forming the peripheral walls of the window, resulting in penetration of the PVC binder into the walls of the mask and the ISM membrane. After drying, therefore, the membrane was intimately bonded to the mask walls by a completely water tight junction zone.

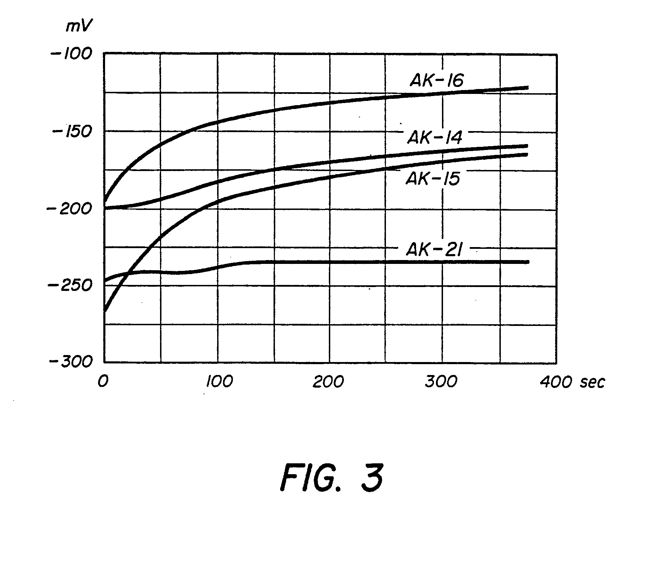

The resulting electrodes were used as follows (see Fig. 3): Using a micropipette, a drop (20—50 μl) of standard solution (or of solution to be measured) was placed in the compartment 4a in contact with the ISM diaphragm 6. Connector 5 was connected to the terminals of a high-impedance electrometer (differential preamplifier, input impedance more than 10$^{-13}$ ohms, current approximately 2 pA, followed by Digital KEITHLEY 197 multimeter) and also to the external reference electrode, which comprised a sintered-tip micropipette in contact with the drop to be measured and containing a KCl reference solution and a plate of Ag/AgCl.

A comparative test was also made on conventionally constructed electrodes without a dry KCl electrolyte (Electrode AK—15). In the test, the potential was measured every 6 seconds for a total period of 6 minutes. The electrodes in the present example rapidly stabilized and had only a very slight drift, below 0.1 mV/min. The comparison electrodes, on the other hand, had an uncontrollable drift (more than 1 mV/min) which was difficult or impossible to stabilize (see Fig. 3). The results obtained from test solutions of KCl having a concentration of 10$^{-2}$ to 10$^{-5}$ M are shown in the following table. These results relate to electrodes previously rinsed in distilled water and then with the solution to be measured at each change of concentration.

| Electrode No. | KCl solution used for the dry KCl layer (M) | Measurement $-$(mV) | | | | Linearity range (M) |
|---|---|---|---|---|---|---|
| | | Conc. KCl (M) | | | | |
| | | $10^{-5}$ | $10^{-4}$ | $10^{-3}$ | $10^{-2}$ | |
| AK-14 | None (compar.) | 176 | 145 | 99 | 46 | $10^{-2} - 10^{-4}$ |
| AK-15 | " " | 196 | 170 | 124 | 57.2 | $10^{-2} - 10^{-4}$ |
| AK-16 | " " | 162 | 117 | 69 | – | $10^{-3} - 10^{-5}$ |
| AK-17 | $7 \times 10^{-3}$ | 253 | 220 | 182 | 142 | $10^{-2} - 10^{-4}$ |
| AK-21 | 0.1 | 265 | 237 | 195 | 162 | $10^{-2} - 10^{-4}$ |
| AK-22 | 3.5 | 279 | 267 | 232 | 197 | $10^{-2} - 10^{-4}$ |

Fig. 3 is a graph showing the potential drift, with respect to time, of virgin electrodes (including AK 14—16 by way of comparison). As can be seen, the electrode according to the invention rapidly stabilizes, unlike the control electrodes.

**Claims**

1. A dry laminar electrode comprising an ion-selective diaphragm (6) for determining specific ions in aqueous solution (10), inter alia in biological fluids, the said electrode not requiring any pretreatment before use and comprising, in the following order on an insulating support (1), a conductive, metal base layer (2), a layer (7) of an insoluble salt of the metal in the base, a layer (8) of an electrolyte having an anion in common with the insoluble salt and an ion identical with the ion to be determined, the metal layer (2) and the two following layers (7, 8) forming an electronic reference half-cell at a stable potential and adapted, when the diaphragm (6) and an external reference electrode (13) are electrically interconnected by the solution (10), to measure the potential and consequently measure the concentration of ions therein, characterised in that the moisture content of the constituent layers (1, 2, 6, 7, 8) of the laminate is less than ·1% by weight and the electrolyte (8) is a solid dehydrated salt.

2. An electrode according to claim 1, characterised in that the conductive metal (2) forming the base is silver, the soluble salt (7) is a silver halide, the electrolyte (8) is a halide of the ions to be determined, and it does not contain any hydrophilic binder such as gelatine.

3. An electrode according to claim 2, characterised in that when the ion to be determined is potassium, the dry electrolyte (8) is KCl.

4. A method of manufacturing an electrode according to, claim 1, comprising a laminate made up of the following in succession: (a) an insulating support, (b) the conductive, base layer, (c) the reference half-cell, all being covered by (d) an insulating waterproof mask formed with at least one window in which a layer of solution is deposited and comprises an organic solvent, an ionophore, a plasticizer and a binder, the solution being subsequently solidified by evaporation to form the ion-selective diaphragm, characterised in that, in order to construct the dry electrolyte layer applied to the insoluble salt covering the base metal, a homogeneous layer of the aforementioned electrolyte is deposited on the surface of the insoluble salt and the resulting salt is dehydrated until the moisture content is below 1% by weight.

5. A method according to claim 4, characterised in that the electrolyte is formed at the surface of the insoluble salt by depositing a homogeneous layer of an aqueous solution of the electrolyte thereon, evaporating the solvent thereof to dryness and heating to at least 115°C to dehydrate it.

6. A method according to claim 4, characterised in that the electrolyte is formed at the surface of the insoluble salt by the physical vapour deposition (PVD) method, inter alia by evaporation in vacuo.

7. A method according to claim 4, characterised in that the solvent used for the ion selective diaphragm is also a solvent of the material forming the mask, and as a result of this common property the two elements are intimately compatible and ensure that their junction zone is completely sealing-tight.

8. A method according to claim 7, characterised in that the binder used for the diaphragm is identical with the mask material.

# EP 0 230 573 B1

**Patentansprüche**

1. Trockene Schichtelektrode mit einem ionenselektiven Diaphragma (6) zur Bestimmung von spezifischen Ionen in wässriger Lösung, unter anderem in biologischen Flüssigkeiten, ohne daß die Elektrode vor der Benutzung eine Vorbehandlung benötigt und die in der folgenden Reihenfolge auf einem isolierenden Träger (1) enthält eine leitende Metallgrundschicht (2), eine Schicht (7) eines unlöslichen Salzes des Metalls auf diesem Grundmetall, eine Schicht (8) eines Elektrolyten, die ein Anion in Übereinstimmung mit dem unlöslichen Salz besitzt und einem Ion, das identisch ist mit dem zu bestimmenden Ion, wobei die Metallschicht (2) und die zwei folgenden Schichten (7, 8) die elektronische Referenzhalbzelle bei einem stabilen Potential bilden und im Falle einer elektrischen Verbindung von Diaphragma (6) und einer äußeren Bezugselektrode (13) über die Lösung (10) das Potential, und damit die Ionenkonzentration in der Lösung, zu messen vermag, dadurch gekennzeichnet, daß der Feuchtigkeitsgehalt der Schichtbestandteile (1, 2, 6, 7, 8) des Laminats weniger als ein Gewichtsprozent beträgt und der Elektrolyt (8) ein festes, dehydriertes Salz ist.

2. Elektrode nach Anspruch 1, dadurch gekennzeichnet, daß die die leitende Schicht (2) bildende Basis aus Silber besteht, das unlösliche Salz (7) ein Halogenid, der Elektrolyt (8) ein Halogenid der zu bestimmenden Ionen ist und kein hydrophiles Bindemittel wie Gelatine enthält.

3. Elektrode nach Anspruch 2, dadurch gekennzeichnet, daß in Fällen, bei denen es sich bei dem zu bestimmenden Ion um Kalium handelt, der trockene Elektrolyt (8) Kaliumchlorid ist.

4. Verfahren zur Herstellung einer Elektrode nach Anspruch 1 mit einem Schichtkörper, der in der folgenden Reihenfolge zusammengesetzt ist: a) einem isolierenden Träger, b) einer leitenden Metallschicht, c) einer Referenzhalbzelle, wobei die Schichtbestandteile überzogen sind mit d) einer isolierenden wasserundurchlässigen Maske, die wenigstens mit einem Fenster ausgebildet ist, in der eine Schicht Lösung aufgebracht wird, die ein organisches Lösungsmittel, einen Ionophor, einen Weichmacher und ein Bindemittel enthält und wobei anschließend die Lösung durch Abdampfen ausgehärtet wird, um ein ionenselektives Diaphragma zu bilden, dadurch gekennzeichnet, daß zur Herstellung einer trockenen Elektrolytschicht, wie sie für das mit dem unlöslichen Salz überzogene Grundmetall verwendet wird, eine homogene Schicht des vorher beschriebenen Elektrolyten auf die Oberfläche des unlöslichen Salzes aufgebracht ist, und daß das sich ergebende Salz dehydriert wird, bis daß der Feuchtigkeitsgehalt unter einem Gewichtsprozent liegt.

5. Verfahren nach Anspruch 4, dadurch gekennzeichnet, daß der Elektrolyt an der Oberfläche des unlöslichen Salzes durch Aufbringen einer homogenen Schicht einer wäßrigen Lösung des Elektrolyten, Abdampfen des Lösungsmittels bis zur Trockne und Dehydratisierung durch Erhitzen auf wenigstens 115 °C gebildet wird.

6. Verfahren nach Anspruch 4, dadurch gekennzeichnet, daß der Elektrolyt auf derc Oberfläche des unlöslichen Salzes durch physikalische Dampfauftragung (PVD), z.B. Abdampfen im Vakuum, gebildet wird.

7. Verfahren nach Anspruch 4, dadurch gekennzeichnet, daß das für das ionenselektive Diaphragma verwendete Lösungsmittel auch eine Lösungsmittel für das Material ist, das die Maske bildet und als Ergebnis dieses gemeinsamen Merkmales die beiden Elemente sehr gut compatibel sind und sich daraus zwischen ihnen ein vollständig abdichtender Verbindungsbereich ergibt.

8. Verfahren nach Anspruch 7, dadurch gekennzeichnet, daß das für das Diaphragma verwendete Bindemittel identisch mit dem Maskenmaterial ist.

**Revendications**

1. Electrode stratifiée sèche, comprenant un diaphragme (6) sélectif à l'égard d'ions, pour analyser des ions spécifiques dans une solution aqueuse (10) entre autres dans des fluides biologiques, l'électrode ne nécessitant aucun prétraitement avant utilisation, et comprenant dans l'ordre suivant, sur un support isolant (1), une couche métallique conductrice de base (2), une couche (7) d'un sel insoluble du métal dans la base, une couche (8) d'un électrolyte ayant un anion en commun avec le sel insoluble et un ion identique à l'ion destiné à être analysé, la couche métallique (2) et les deux couches suivantes (7, 8) formant une demi-cellule électrochimique de référence à un potentiel stable, et adaptée lorsque le diaphragme (6) et une électrode de référence externe (13) sont électriquement interconnectés par la solution (10), à mesurer le potentiel et en conséquence la concentration en ions dans celle-ci, caractérisée en ce que la teneur en humidité des constituants des couches (1, 2, 6, 7, 8) du stratifié, n'est pas inférieure à 1 % en poids, et en ce que l'électrolyte (8) est un sel solide déshydraté.

2. Electrode selon la revendication 1, caractérisé en ce que le métal conducteur (2) formant la base est l'argent, en ce que le sel insoluble (7) est un halogénure d'argent, en ce que l'électrolyte (8) est un halogénure des ions destinés à être analysés, et en ce qu'elle ne contient pas de liant hydrophile tel que la gélatine.

3. Electrode selon la revendication 2, caractérisée en ce que lorsque l'ion destiné à être analysé, est le potassium, l'électrolyte anhydre (8) est KCl.

4. Procédé de fabrication d'une électrode selon la revendication 1, comprenant un stratifié constitué dans l'ordre suivant: (a) d'un support isolant, (b) de la couche de base conductrice, et (c) de la demicellule

7

de référence, tous recouverts par (d) un mas que isolant imperméable à l'eau doté d'au moins une fenêtre dans laquelle on dépose une couche d'une solution comprenant un solvant organique, un ionophore, un plastifiant et un liant, la solution étant ensuite solidifiée par évaporation en formant le diaphragme sélectif à l'égard d'ions, caractérisé en ce qu-afin d'appliquer la couche d'électrolyte anhydre sur le sel insoluble recouvrant le métal de base, on dépose une couche homogène de l'électrolyte précité, sur la surface du sel insoluble, et le sel résultant est déshydraté jusqu-à ce que la teneur en humidité soit inférieure à 1% en poids.

5. Procédé selon la revendication 4, caractérisé en ce que l'électrolyte est appliqué sur la surface du sel insoluble en déposant sur celui-ci, une couche homogène d'une solution aqueuse de l'électrolyte, en évaporant le solvant de celui-ci jusqu'à siccité, et en chauffant jusqu'à au moins 115 °C pour le déshydrater.

6. Procédé selon la revendication 4, caractérisé en ce que l'électrolyte est appliqué sur la surface du sel insoluble selon le procédé par dépôt physique de vapeur (PVD), entre autres par évaporation sous vide.

7. Procédé selon la revendication 4, caractérisé en ce que le solvant employé pour le diaphragme sélectif à l'égard d'ions, est également un solvant du matériau formant le masque, et en raison de cette caractéristique commune, les deux éléments sont intimement compatibles, en assurant que leur zone de jonction est complètement hermétique.

8. Procédé selon la revendication 7, caractérisé en ce que le liant employé pour le diaphragme est identique à celui du matériau de masque.

FIG. 1

FIG. 2

FIG. 3